# FASCICULE DE BREVET EUROPEEN

(11) **EP 2 917 051 B1**
(45) Date de publication et mention de la délivrance du brevet: **25.07.2018**
(21) Numéro de dépôt: 13805446.5
(22) Date de dépôt: 31.10.2013
(51) Int. Cl.: B60G 7/00

(54) **BRAS DE SUSPENSION POUR VÉHICULE**
KRAFTFAHRZEUGAUFHÄNGUNGSLENKER
SUSPENSION ARM FOR VEHICLE

(30) Priorité: 09.11.2012 FR 1260620
(43) Date de publication de la demande: 16.09.2015
(73) Titulaire: PSA Automobiles SA, 78300 Poissy (FR)
(72) Inventeur: CADET, Bruno, F-25700 Valentigney (FR)
(74) Mandataire: Rosenberg, Muriel Sylvie
(86) Numéro de dépôt international: PCT/FR2013/052610
(87) Numéro de publication internationale: WO 2014/072620

(56) Documents cités:
- WO-A1-2004/065146
- US-A- 5 601 304
- US-A1- 2011 272 911

## Description

La présente invention concerne un bras de suspension d'une roue à la caisse d'un véhicule automobile qui subit lors de sa fabrication une étape d'usinage nécessitant des zones planes pour sa mise en référence sur machine d'usinage.

Pour des véhicules qui subissent des efforts importats on privilégie les pièces de conception en acier forgé. De telles pièces en acier forgé, comme également des bras de suspension de type aluminium moulé ont besoin d'être usinées. Une opération de reprise en usinage nécessite de définir des zones de départ d'usinage (DU). Ces zones de départ d'usinage servent à la mise en référence du bras de suspension sur une machine d'usinage.

Jusqu'à ce jour, ces zones planes ont été agencées à différents emplacements sur le bras de suspension en prévoyant des bosses avec une surface plane d'appui.

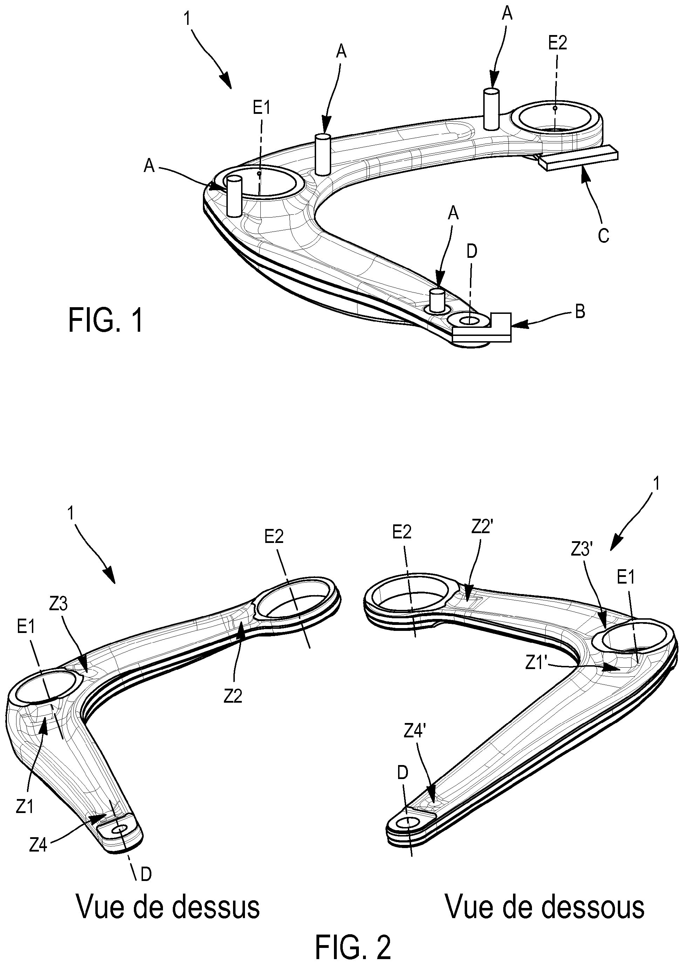

Fig. 1 montre un bras de suspension 1 de l'art antérieur. Le bras de suspension présente la forme d'un triangle. Deux points de fixation E₁ et E₂ pour la fixation du bras de suspension à la caisse du véhicule se trouvent à une extrémité libre du bras et au coude du bras de suspension. Sur la face supérieure du bras de suspension 1 sont agencées quatre zones planes d'appui sur lesquelles interviennent des éléments de maintien d'une machine d'usinage symbolisés en Fig. 1 uniquement par des cylindres A. Le document US2011/0272911 divulgue aussi un bras de suspension de l'art antérieur. Bien entendu, pour le serrage du bras de suspension sur la machine d'usinage sur la face inférieure du bras de suspension sont prévues également et en vis-à-vis des zones planes d'appui des zones de contre-appui BC.

Le fait de prévoir ces zones planes d'appui A en bosse entraîne une augmentation du poids du bras de suspension.

A ce jour, dans l'industrie automobile, un des objectifs à atteindre consiste à tout mettre en oeuvre pour réduire le poids du véhicule afin de réduire sa consommation en carburant. Ceci concerne également bien entendu des pièces constituants la suspension des roues d'un véhicule.

Ainsi, c'est le but de la présente invention de trouver une solution pour réduire le poids des bras de suspension d'un véhicule automobile et de ce fait de réduire les coûts des matériaux.

C'est l'objet de la présente invention de proposer un bras de suspension d'une roue à la caisse d'un véhicule automobile qui subit lors de sa fabrication une étape d'usinage nécessitant des zones planes pour sa mise en référence sur machine d'usinage, dans lequel au moins une partie de ces zones planes est agencée en creux dans des zones faiblement sollicitées du bras de suspension.

De préférence, le bras de suspension est du type acier forgé.

Selon une variante, le bras de suspension est du type aluminium moulé.

Selon un mode de réalisation préféré, le bras de suspension détermine un triangle avant, fixé à la caisse en deux points voisins et en un troisième point au support de roue, sur une face du bras au moins une zone plane d'appui en creux est agencée à proximité du point de fixation au coude du triangle, une zone plane d'appui en creux est agencée à proximité de l'autre point de fixation du bras sur la caisse et une autre zone plane d'appui en bosse est agencée à proximité du point de fixation du bras au support de roue.

Avantageusement, sur l'autre face du bras des zones planes de contre-appui sont agencées en vis-à-vis des zones planes d'appui respectivement agencées en creux et en bosse, comme leurs zones planes d'appui correspondantes, pour le serrage du bras de suspension sur une machine d'usinage.

Au moins certaines des zones planes peuvent être des zones de départ d'usinage.

Selon un mode de réalisation préféré, sur chaque face du bras deux zones planes en creux sont agencées à proximité du point de fixation au coude du triangle.

D'autres caractéristiques et avantages de l'invention apparaîtront à la lecture d'un exemple de réalisation d'un bras de suspension selon l'invention, donné à titre non-limitatif, en se référant aux figures en annexe, dans lesquelles :
Fig. 1 est une vue en perspective d'un mode de réalisation d'un bras de suspension de l'art antérieur avec quatre zones planes d'appui, serré dans une machine d'usinage;
Fig. 2 montre deux vues en perspective d'un mode de réalisation d'un bras de suspension en vue de dessus et en vue de dessous.

Comme le montre Fig. 2, il y a quatre zones planes d'appui réparties sur les faces du bras de suspension 1. Deux zones Z2, Z4 se trouvent à proximité des extrémités libres du bras de suspension 1 et deux autres zones se trouvent près du coude du bras de suspension 1. Les zones planes Z1, Z2 et Z3 se trouvent à des emplacements de sollicitation du bras de suspension relativement faibles. Par contre, la zone plane d'appui Z4 se trouve à proximité du point de fixation du bras de suspension au support de roue. A cet emplacement, la sollicitation du bras de suspension est relativement élevée et il n'est pas recommandé d'amincir l'épaisseur du bras de suspension à cet endroit. Cette zone plane est agencée donc en bosse pour garantir la stabilité du bras de suspension vis-à-vis des sollicitations importantes.

Par contre, les trois autres emplacements où se trouvent les zones planes d'appui sont agencées en creux, ce qui se traduit par une économie du matériau et également une réduction du poids du bras de suspension dans son ensemble. Pour chaque bras de suspension, le cas échéant d'un triangle avant, sachant que chaque véhicule en possède deux, permet de ce fait d'économiser environ 150 grammes d'acier. Au total, on gagne ainsi 300 grammes de poids pour chaque véhicule. Ceci n'est pas négligeable car il s'agit d'une masse non suspendue du véhicule.

## Revendications

1. Bras de suspension (1) d'une roue à la caisse d'un véhicule automobile qui subit lors de sa fabrication une étape d'usinage nécessitant des zones planes pour sa mise en référence sur une machine d'usinage, **caractérisé en ce qu'**au moins une partie de ces zones planes sont agencées en creux dans des zones faiblement sollicitées du bras de suspension.

2. Bras de suspension (1) selon la revendication 1, **caractérisé en ce que** le bras de suspension (1) est du type acier forgé.

3. Bras de suspension (1) selon la revendication 1, **caractérisé en ce que** le bras de suspension (1) est du type aluminium moulé.

4. Bras de suspension (1) selon l'une quelconque des revendications précédentes, **caractérisé en ce que** le bras de suspension (1) forme un triangle avant, fixé à la caisse en deux points voisins (E₁, E₂) et en un troisième point (D) au support de roue, sur une face du bras au moins une zone plane (Z1, Z3) d'appui en creux est agencée à proximité du point de fixation (E1) au coude du triangle, une zone plane (Z2) d'appui en creux est agencée à proximité de l'autre point de fixation (E2) du bras sur la caisse et une autre zone plane (Z4) d'appui en bosse est agencée à proximité du point (D) de fixation du bras au support de roue.

5. Bras de suspension (1) selon la revendication 4, **caractérisé en ce que** sur l'autre face du bras (1) des zones planes (Z1' - Z4') de contre-appui sont agencées en vis-à-vis des zones planes (Z1-Z4) d'appui respectivement agencées en creux et en bosse, comme leurs zones planes (Z1-Z4) d'appui correspondantes, pour le serrage du bras de suspension (1) sur une machine d'usinage.

6. Bras de suspension (1) selon l'une quelconque des revendications précédentes, **caractérisé en ce que** les zones planes (Z1-Z4, Z1'-Z4') sont au moins partiellement des zones de départ d'usinage.

7. Bras de suspension (1) selon l'une quelconque des revendications 4 à 6, **caractérisé en ce que** sur chaque face du bras deux zones planes (Z1, Z3; Z1', Z3') en creux sont agencées à proximité du point de fixation (E₁) au coude du triangle.

## Patentansprüche

1. Aufhängungslenker (1) eines Rads an der Karosserie eines Kraftfahrzeugs, der bei seiner Herstellung einen Bearbeitungsschritt erfährt, der flache Zonen für seine Positionierung auf einer Bearbeitungsmaschine benötigt, **dadurch gekennzeichnet, dass** mindestens ein Teil dieser flachen Zonen in Vertiefung in Zonen eingerichtet ist, die von dem Aufhängungslenker geringfügig beansprucht werden.

2. Aufhängungslenker (1) nach Anspruch 1, **dadurch gekennzeichnet, dass** der Aufhängungslenker (1) vom Typ Schmiedeeisen ist.

3. Aufhängungslenker (1) nach Anspruch 1, **dadurch gekennzeichnet, dass** der Aufhängungslenker (1) vom Typ geformtes Aluminium ist.

4. Aufhängungslenker (1) nach einem der vorhergehenden Ansprüche, **dadurch gekennzeichnet, dass** der Aufhängungslenker (1) ein vorderes Dreieck bildet, das an der Karosserie an zwei benachbarten Stellen (E₁, E₂) befestigt ist, und an einer dritten Stelle (D) an dem Radträger, auf einer Seite des Lenkers mindestens eine flache Zone (Z₁, Z₃) zum Aufliegen in Vertiefung in der Nähe der Befestigungsstelle (E₁) an dem Winkelstück des Dreiecks eingerichtet ist, eine flache Zone (Z₂) in Auflage in Vertiefung in der Nähe der anderen Befestigungsstelle (E₂) des Lenkers auf der Karosserie eingerichtet ist, und eine andere flache Zone (Z₄) zum Aufliegen auf einem Höcker in der Nähe der Befestigungsstelle (D) des Lenkers auf dem Radträger eingerichtet ist.

5. Aufhängungslenker (1) nach Anspruch 4, **dadurch gekennzeichnet, dass** auf der anderen Seite des Lenkers (1) flache Zonen (Z₁' bis Z₄') zur Gegenauflage in Gegenüberlage mit den flachen Zonen (Z₁ bis Z₄) zum Aufliegen eingerichtet sind, die jeweils in Vertiefung oder Höcker als ihre entsprechenden flachen Zonen (Z₁ bis Z₄) zum Aufliegen, für das Spannen des Aufhängungslenkers (1) auf einer Bearbeitungsmaschine, eingerichtet sind.

6. Aufhängungslenker (1) nach einem der vorhergehenden Ansprüche, **dadurch gekennzeichnet, dass** die flachen Zonen (Z₁ bis Z4, Z₁' bis Z₄') mindestens teilweise Bearbeitungsanfangszonen sind.

7. Aufhängungslenker (1) nach einem der Ansprüche 4 bis 6, **dadurch gekennzeichnet, dass** auf jeder Seite des Lenkers zwei flache Zonen (Z₁, Z₃; Z₁', Z₃') in Vertiefung in der Nähe der Befestigungsstelle (E₁) an dem Winkelstück des Dreiecks eingerichtet sind.

## Claims

1. A suspension arm (1) of a wheel to the body of a motor vehicle which undergoes during its manufacture a machining step necessitating planar zones for its referencing on a machine-tool, **characterized in that** at least a portion of these planar zones are arranged so as to be recessed in lightly stressed zones of the suspension arm.

2. The suspension arm (1) according to Claim 1, **characterized in that** the suspension arm (1) is of the forged steel type.

3. The suspension arm (1) according to Claim 1, **characterized in that** the suspension arm (1) is of the cast aluminium type.

4. The suspension arm (1) according to any one of the preceding claims, **characterized in that** the suspension arm (1) forms a front triangle, fixed to the body at two neighbouring points (E₁, E₂) and at a third point (D) to the wheel support, on a face of the arm at least one recessed planar supporting zone (Z1, Z3) is arranged close to the point of attachment (E1) at the elbow of the triangle, one recessed planar supporting zone (Z2) is arranged close to the other point of attachment (E2) of the arm on the body and another projecting planar supporting zone (Z4) is arranged close to the point of attachment (D) of the arm to the wheel support.

5. The suspension arm (1) according to Claim 4, **characterized in that** the other face of the arm (1) of the planar counter-supporting zones (Z1' - Z4') are arranged opposite planar supporting zones (Z1-Z4) respectively arranged recessed and projecting, as their corresponding planar supporting zones (Z1-Z4), for the clamping of the suspension arm (1) on a machine-tool.

6. The suspension arm (1) according to any one of the preceding claims, **characterized in that** the planar zones (Z1-Z4, Z1'-Z4') are at least partially machining-start zones.

7. The suspension arm (1) according to any one of Claims 4 to 6, **characterized in that** on each face of the arm two recessed planar zones (Z1, Z3; Z1', Z3') are arranged close to the point of attachment (E₁) at the elbow of the triangle.
